Europäisches Patentamt

European Patent Office

Office européen des brevets

(11) Publication number: **0 166 002**
**A1**

# EUROPEAN PATENT APPLICATION

published in accordance with Art. 158(3) EPC

(21) Application number: 85900190.1

(22) Date of filing: 14.12.84

Data of the international appli-
cation taken as a basis:

(86) International application number:
**PCT/JP 84/00596**

(87) International publication number:
**WO 85/02575 (20.06.85 85/14)**

(30) Priority: 15.12.83 JP 234944/83

(43) Date of publication of application: 02.01.86
Bulletin 86/1

(84) Designated Contracting States: **DE FR GB**

(51) Int. Cl.⁴: **B 25 J 9/22**

(71) Applicant: **FANUC LTD, 3580, Shibokusa Aza-Komanba
Oshino-mura, Minamitsuru-gun Yamanashi 401-05 (JP)**

(72) Inventor: **NAKASHIMA, Seiichiro, 5-3-2, Hino-Honcho
Hino-shi, Tokyo 191 (JP)**
Inventor: **TOYODA, Kenichi, 1-17-25, Shinmei Hino-shi,
Tokyo 191 (JP)**
Inventor: **TORII, Nobutoshi, Room 308, Fuyo-Haitsu 65-4,
Takakura-cho, Hachioji-shi Tokyo 192 (JP)**
Inventor: **NIHEI, Ryo, Room 202, Mezonrira 1-34-7,
Kichijoji-Honcho, Musashino-shi Tokyo 180 (JP)**

(74) Representative: **Allman, Peter John et al, Marks and
Clerk Scottish Life House Bridge Street, Manchester
M3 3DP (GB)**

(54) **INDUSTRIAL ROBOT WITH ORIGIN ADJUSTING MEANS.**

㊿ An articulated industrial robot has origin adjusting re-
cesses (11a, 12a, 12b, 13a, 13b, 14a, 14b, 15a, 16a, 16b and
26a) formed at the rotatable interconnection between a fixed
trunk component (11) and a rotatable trunk component (12),
the rotatable interconnection between the rotatable trunk
component (12) and a first arm (13), the rotatable intercon-
nection between the first arm (13) and a second arm (14),
the rotatable interconnection between the second arm (14)
and a wrist proximal region (15) and the interconnection
between the wrist proximal region (15) and a wrist distal
region (16), and gauges (20, 21, 22, 23, 24, 25, 26, 27 and 28)
respectively fitted in the above-described recesses, thereby
allowing a visual and accurate origin adjustment.

DESCRIPTION

TITLE OF THE INVENTION

INDUSTRIAL ROBOT WITH ORIGIN ADJUSTING MEANS

TECHNICAL FIELD

The present invention relates to an articulated type industrial robot, more particularly to an industrial robot with an origin adjusting means.

BACKGROUND ART

Generally, an industrial robot has a plurality of robot components, such as a rotary body, an arm and a wrist, which are joined by means of joints for relative rotation about the axes of the respective joints. The respective motions of these robot components are controlled numerically according to a program taught beforehand to the robot for the desired motion of the output end thereof provided at the extremity of the wrist thereof.

Since the program for the numerical control of a robot is designed on the basis of the original position of each articulating joint, the joints of the robot must be positioned at the original positions, in teaching the program to the robot or in making the robot execute the program. Nevertheless, it has been a conventional procedure to position each articulating joint of a robot at the original position by turning or revolving the components of the robot and adjusting the angle between the components through eye measurement without employing any positive origin adjusting means. Accordingly, such origin adjustment has been unsatisfactory in respect of positioning accuracy and repeatability.

DISCLOSURE OF THE INVENTION

Accordingly, it is an object of the present invention to provide an industrial robot provided with origin adjusting means capable of eliminating the above-mentioned disadvantages of the conventional industrial robot.

It is another object of the present invention to provide an articulated type robot integrally having an origin adjusting means provided at each articulating joint thereof.

The objects of the present invention are achieved by an industrial robot comprising: a stationary body unit having a first reference recess formed at a fixed position to receive a first gauge member removably therein; a rotary body unit disposed on the stationary body unit so as to be rotatable about the longitudinal axis thereof, having a second reference recess formed at a fixed position which approaches the first reference recess when the rotary body unit is turned relative to the stationary body unit and positioned at an original position, to receive removably a second gauge member which cooperates with the first gauge member, and a third reference recess formed at another fixed position to receive a third gauge member removably therein; a first arm mounted on the rotary body unit so as to be rotatable about a first transverse axis extending perpendicularly to the longitudinal axis of the rotary body unit, and having a fourth reference recess formed at a fixed position which approaches the second reference recess when the first arm is turned relative to the rotary body unit and positioned at a fixed original position, to receive removably a fourth gauge member which cooperates with the third gauge member, and a fifth reference recess formed at another fixed position to receive a fifth gauge member therein removably; a second arm attached to the first arm so as to be rotatable about a second transverse axis extending in parallel to the first transverse axis, and having a sixth reference recess formed at a fixed position which approaches the fifth reference recess when the second arm is turned relative to the first arm and positioned at a fixed original position, to receive removably a sixth gauge member which cooperates with the fifth gauge member, and a seventh reference recess formed at another fixed position to receive a seventh gauge member therein removably; a base wrist unit attached to the second arm so as to be rotatable about a third transverse axis extending in parallel to the second transverse axis, and having an eighth reference recess formed at a fixed position which approaches the seventh reference recess when the base wrist unit is turned relative to the second arm and positioned at a fixed original position to receive removably an eighth gauge member which cooperates with the seventh gauge member; and a fore wrist unit attached to the base wrist unit so as to be rotatable about a fourth transverse axis extending perpendicularly to the third transverse axis, and having holes formed therein to hold removably a ninth gauge member which cooperates with the eighth gauge member seated in the eighth reference recess, when the fore wrist unit is turned relative to the base wrist unit and positioned at a fixed original position. Furthermore, the present invention provides an articulated type industrial robot having a plurality of rotary joints; a pair of origin adjusting recesses formed in the two members joined by each rotary joint, so as to be brought into alignment with each other; and a pair of gauge members each having a sharp point and capable of being removably fitted in a pair of the origin adjusting recesses formed in the two members joined by each rotary joint, whereby the origin of each rotary joint is adjusted by positioning the rotary joint at an original position so that the respective sharp points of a pair of the gauge members fitted in the origin adjusting recesses respectively coincide with each other.

BRIEF DESCRIPTION OF THE DRAWINGS

Figure 1 is a schematic side elevation of an articulated type industrial robot with original adjusting means, according an embodiment of the present invention;

Fig. 2 is a fragmentary perspective view showing portions of the stationary body unit and the rotary body unit of the robot of Fig. 1;

Fig. 3 is a perspective view of gauge members to be used on the stationary body unit and the rotary body unit of the robot of Fig. 1;

Fig. 4 is a fragmentary perspective view of the rotary body and the first arm of the robot of Fig. 1;

Fig. 5 is a fragmentary perspective view showing the respective portions around the joint of the first arm and the second arm of the robot of Fig. 1;

Fig. 6 is a fragmentary perspective view showing the front end and its vicinity to the second arm of the robot of Fig. 1; and

Fig. 7 is a perspective view showing gauge members to be applied to the second arm and the base wrist unit and gauge members to be applied to the base wrist unit and the fore wrist units.

BEST MODE FOR CARRYING OUT THE INVENTION

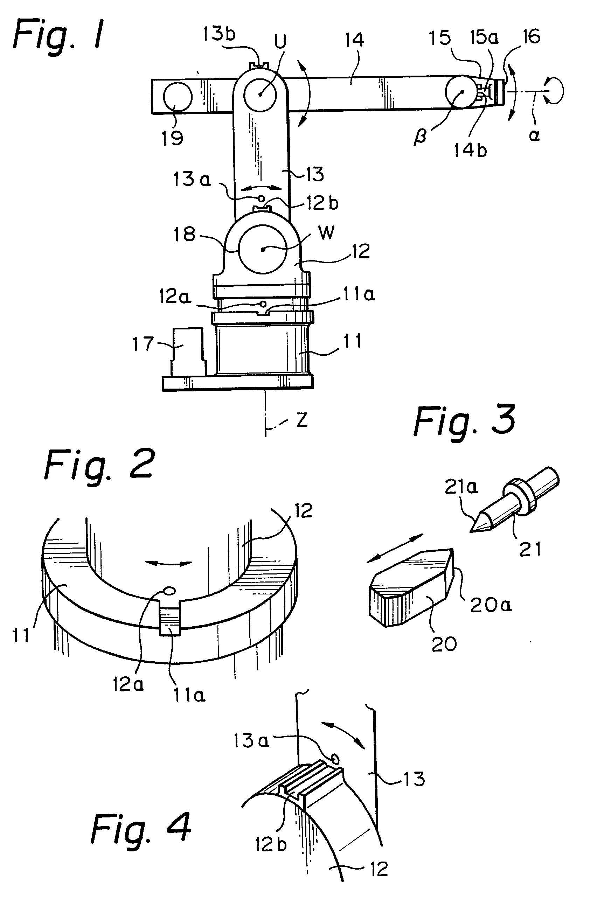

Referring to Fig. 1, an articulated type industrial robot having five rotary joints comprises a stationary body unit 11, a rotary body unit 12, a first arm 13, a second arm 14, a base wrist unit 15 and a fore wrist unit 16 as mechanical components. The fore wrist unit 16 functions as an output unit of the robot and is adapted to be mounted thereon, for example, with a robot hand, not shown. The rotary body unit 12 is joined to the stationary body unit 11 by a first rotary joint so as to be rotatable relative to the stationary body unit about a longitudinal axis (Z-axis) aligned with the center axis of the stationary body unit 11. The rotary body unit 12 is driven for rotation by a motor 17 mounted on the base of the stationary body unit 11. The first arm 13 is joined to the rotary body unit 12 by a second rotary joint so as to be rotatable about a first transverse axis (W-axis) extending perpendicularly to the Z-axis. The first arm is driven for rotation by a motor 18 attached to the side surface of the rotary body unit 12. The second arm 14 is joined to the first arm 13 by a third rotary joint so as to be rotatable about a second transverse axis (U-axis) extending in parallel to the W-axis. The second arm is driven for rotation by a motor, not shown in Fig. 1, attached to the other side surface of the rotary body 12 opposite the side surface to which the motor 18 is attached. The base wrist unit 15 is joined to the second arm 14 by a fourth rotary joint so as to be rotatable about a third transverse axis ($\beta$-axis) extending in parallel to the U-axis. The base wrist unit is driven for rotation by a motor 19 attached to the rear end of the second arm 14. The fore wrist unit 16 is joined to the base wrist unit 15 by a fifth joint so as to be rotatable about a fourth transverse axis ($\alpha$-axis) extending perpendicularly to the $\beta$-axis. The fore wrist unit is driven for rotation by a motor, not shown in Fig. 1, attached to the rear end of the second arm 14 opposite to the motor 19. Origin adjusting means will be described hereinafter with reference to Figs. 2 to 7.

As shown in Fig. 2, a pair of recesses 11a and 12a are formed in the continuous portions of the stationary body unit 11 and the rotary body unit 12, respectively. The recess 11a is a slot formed in the upper end surface of the stationary body unit 11 so as to extend perpendicularly to the Z-axis. The slot-formed recess 11a is capable of receiving a plate gauge 20 as shown in Fig. 3 by slidable fitting. The other recess 12a is a hole formed in the side surface of the rotary body unit 12. A pin gauge 21 as shown in Fig. 3 can be removably fitted in the hole formed recess 12a. A pair of the gauges 20 and 21 have sharp ends 20a and 21a, respectively. A pair of the recesses 11a and 12a are located so that the sharp ends 20a and 21a of a pair of the gauges 20 and 21 fitted in the recesses 11a and 12a respectively coincide with each other when the rotary body 12 is at an original position with respect to the stationary body unit 11. Accordingly, the origin of the rotary body unit can be adjusted by making the sharp end 21a of the pin gauge 21 coincide with the sharp end 20a of the plate gauge 20. Since the recesses 11a and 12a for origin adjustment can be formed beforehand in machining the stationary body unit 11 and the rotary body unit 12 at positions determined from datum planes respectively, the recesses 11a and 12a can be accurately positioned.

As shown in Fig. 4, a pair of recesses 12b and 13a are formed in the contiguous portions of the rotary body unit 12 and the first arm 13, respectively. The recess 12b is a slot formed in the upper surface of the rotary body unit 12 so as to extend in parallel to the W-axis. The slot-formed recess 12b is capable of receiving a plate gauge, not shown, similar to the plate gauge 20 shown in Fig. 3 by slidable fitting. The other recess 13a is a hole formed in the side surface of the first arm 13 which is capable of removably receiving a gauge, not shown, similar to the pin gauge 21 shown in Fig. 3. A pair of the recesses 12b and 13a are located so that the sharp ends of a pair of the gauges fitted in the pair of recesses 12b and 13a, respectively, coincide with each other when the first arm 13 is at an original position of the turning motion thereof with respect to the rotary body unit 12. Accordingly, the origin of the first arm 13 can be adjusted by making the sharp end of the pin gauge coincide with the sharp end of the plate gauge. The recesses 12b and 13b for origin adjustment can be formed beforehand during machining of the rotary body unit 12 and the first arm 13 at positions determined from datum planes respectively, and hence the recesses 12b and 13a can be accurately positioned.

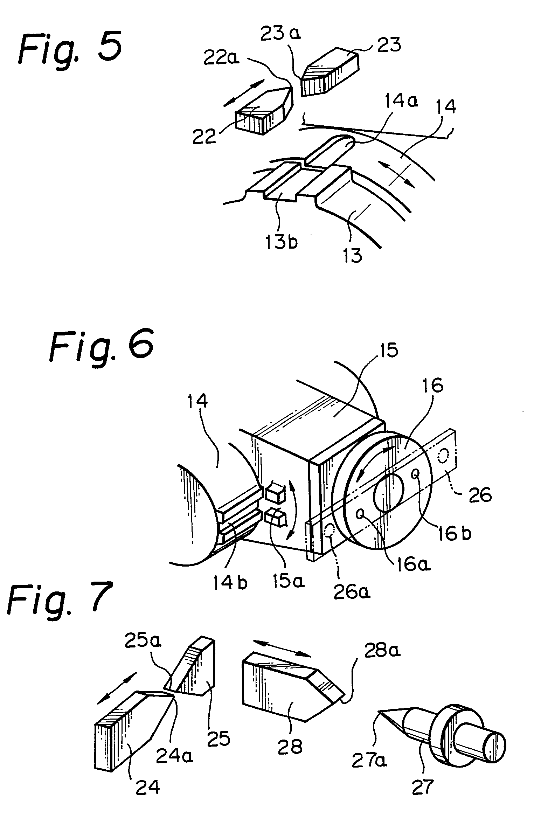

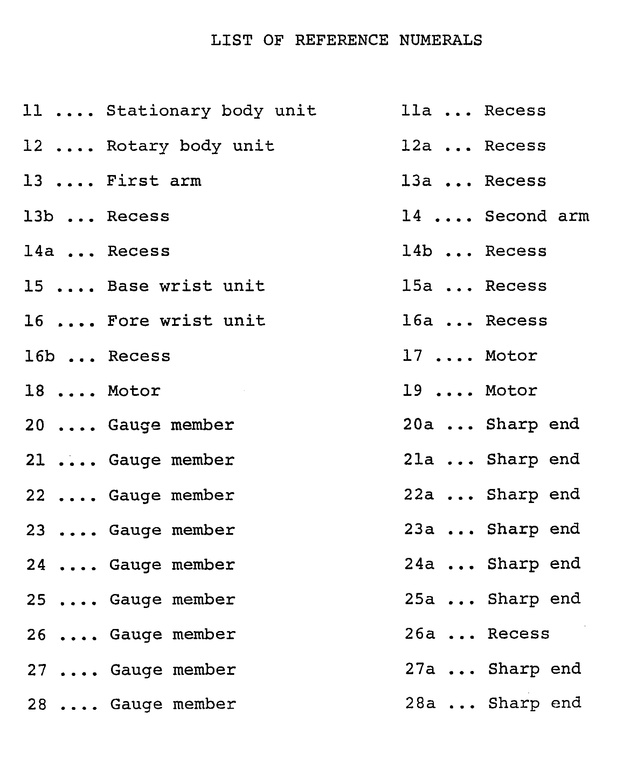

As shown in Fig. 5, a pair of recesses 13b and 14a are formed in the contiguous portions of the first arm 13 and the second arm 14 respectively. The recess 13b is a slot formed in the upper surface of the first arm 13. The slot-formed recess 13b extends in parallel to the U-axis. The slot-formed recess 13b is capable of receiving a plate gauge 22 by slidable fitting. The other recess 14a is a slot formed in the upper surface of the second arm 14 so as to extend in parallel to the U-axis. The slot-formed recess 14a is capable of removably receiving a plate gauge 23. The plate gauges 22 and 23 have sharp ends 22a and 23a respectively. A pair of recesses 13b and 14a are located so that the sharp ends 22a and 23a of the pair of plate gauges 22 and 23 fitted in the recesses 13b and 14a respectively coincide with each other when the second arm 14 is positioned at an original position with respect to the first arm 13. Accordingly, the origin of the second arm 14 can be adjusted by making the sharp end 23a of the plate gauge 23 coincide with the sharp end 22a of the plate gauge 22. Since the recesses 13b and 14a can be formed beforehand during machining of the first arm 13 and the second arm 14 from datum planes respectively, the recesses 13b and 14a can be accurately positioned.

As shown in Fig. 6, a pair of recesses 14b and 15a are formed in the contiguous portions of the second arm 14 and the base wrist unit 15, respectively. The recess 14b is a slot formed in the front end surface of the second arm 14 so as to extend in parallel to the β-axis. The slot-formed recess 14b is capable of receiving a plate gauge 24 shown in Fig. 7 by slidable fitting. The other recess 15a is a slot formed in the side surface of the base wrist unit 15 so as to extend in parallel to the α-axis in this embodiment. A plate gauge 25 shown in Fig. 7 can be fitted in the slot-formed recess 15a. The plate gauges 24 and 25 have sharp ends 24a and 25a respectively. The pair of recesses 14b and 15a are located so that the sharp ends 24a and 25a of the plate gauges 24 and 25 fitted in the recesses 14b and 15a, respectively, coincide with each other when the base wrist unit 15 is positioned at an original position with respect to the second arm 14. Accordingly, the origin of the base wrist unit 15 can be adjusted by making the sharp end 25a of the plate gauge 25 coincide with the sharp end 24a of the plate gauge 24. The recesses 14b and 15a can be formed beforehand during machining of the second arm 14 and the base wrist unit 15 at positions determined from datum planes, respectively, and hence the recesses 14b and 15a can be accurately positioned.

In the portion of the fore wrist unit 16 contiguous to the base wrist unit 15, the fore wrist unit 16 is provided with recesses 16a and 16b, which are reamed holes or threaded holes. A gauge 26 having pins or screws which fit in the reamed holes or the threaded holes can be attached to the fore wrist unit 16. A pin gauge 27 shown in Fig. 7 can be removably fitted in a recess 26a, a reamed hole, formed in the gauge 26. On the other hand, the recess 15a is capable of receiving a plate gauge 28 shown in Fig. 7 by slidable fitting. The gauges 27 and 28 have sharp ends 27a and 28a. The recesses 16a, 16b and 26a are located so that the sharp ends 27a and 28a of the gauges 27 and 28 fitted in the recesses 15a and 26a coincide with each other when the fore wrist unit 16 is at an original position with respect to the base wrist unit 15. The recesses 16a and 16b can be formed beforehand at positions determined from a datum plate during machining of the fore wrist unit 16.

After assembling the industrial robot provided with the origin adjusting means of the above-mentioned constitution, the origin of each joint of the industrial robot is decided by fitting the corresponding gauges in the corresponding recesses for origin adjustment, and then gradually turning one of the corresponding pair of the robot components relative to the other to a position where the sharp ends of the corresponding pair of the gauges coincide with each other as one of the corresponding pair of the gauges is slid for displacement. If the relative position between the adjacent robot components is deviated from a position corresponding to the origin of the corresponding joint, the sharp ends of the corresponding gauges overlap each other when one of the gauges is advanced toward the other. Therefore, misalignment of the gauges can be extremely precisely and readily recognized visually. Accordingly, the origin adjustment of the industrial robot can be extremely easily and highly accurately achieved.

After the completion of the origin adjustment, the gauges can be removed from the recesses.

Although the invention has been described with reference to a preferred embodiment thereof, it is obvious that the present invention is not limited to the preferred embodiment. For example, the present invention is applicable not only to the above-mentioned articulated type robot having five joints, but also to an articulated type robot having six joints, for instance. Furthermore, standardization of the form and size of the recesses enables the common use of a single gauge in several recesses. Still further, the morphology of the recesses formed in the robot and that of the gauges may be variously changed without departing from the scope of the invention determined by the appended claims.

## CLAIMS

1. An industrial robot comprising:

a stationary body unit having a first reference recess formed at a fixed position to receive a first gauge member removably therein;

a rotary body unit disposed on said stationary body unit so as to be rotatable about the longitudinal axis thereof, having a second reference recess formed at a fixed position which approaches the first reference recess when the rotary body unit is turned relative to the stationary body unit and positioned at an original position, to receive removably a second gauge member which cooperates with said first gauge member, and a third reference recess formed at another fixed position to receive a third gauge member removably therein;

a first arm mounted on said rotary body unit so as to be rotatable about a first transverse axis extending perpendicularly to the longitudinal axis of said rotary body unit, and having a fourth reference recess formed at a fixed position which approaches said second reference recess when said first arm is turned relative to said rotary body unit and positioned at a fixed original position, to removably receive a fourth gauge member which cooperates with said third gauge member, and a fifth reference recess formed at another fixed position to removably receive a fifth gauge member therein;

a second arm attached to said first arm so as to be rotatable about a second transverse axis extending in parallel to said first transverse axis, and having a sixth reference recess formed at a fixed position which approaches said fifth reference recess when said second arm is turned relative to said first arm and positioned at a fixed original position, to removably receive a sixth gauge member which cooperates with said fifth gauge member, and a seventh reference recess formed at another fixed position to removably receive a seventh gauge member therein;

a base wrist unit attached to said second arm so as to be rotatable about a third transverse axis extending in parallel to said second transverse axis, and having an eighth reference recess formed at a fixed position which approaches said seventh reference recess when said base wrist unit is turned relative to said second arm and positioned at a fixed original position to removably receive an eighth gauge member which cooperates with said seventh gauge member, and;

a fore wrist unit attached to said base wrist unit so as to be rotatable about a fourth transverse axis extending perpendicularly to said third transverse axis, and having holes formed therein to removably hold a ninth gauge member which cooperates with said eighth gauge member received in said eighth reference recess, when said fore wrist unit is turned relative to said base wrist unit and positioned at a fixed original position.

2. An industrial robot according to Claim 1, wherein said first reference recess is formed in an upper end of said stationary body unit and said second reference recess is formed in a lower portion of said rotary body unit contiguous to said upper end of said stationary body unit.

3. An industrial robot according to Claim 1, wherein said third reference recess is formed in a top of said rotary body unit and said fourth reference recess is formed in one end of said first arm contiguous to said top of said rotary body unit.

4. An industrial robot according to Claim 3, wherein said fifth reference recess is formed at the other end of said first arm and said sixth reference recess is formed in a rear part of said second arm contiguous to said other end of said first arm.

5. An industrial robot according to Claim 1,

0166002

wherein said seventh reference recess is formed in said front end of said second arm and said eighth reference recess is formed in said front end of said base wrist unit contiguous to said front end of said second arm.

6. An industrial robot according to Claim 1, wherein each of said first to said ninth gauge members has a sharp end which can be brought into coincidence with a sharp end of an associated gauge member with which the former cooperates.

7. An articulated type industrial robot having a plurality of rotary joints each provided with a pair of recesses capable of being aligned with each other for origin adjustment and a pair of gauge members capable of being removably fitted in a pair of the recesses for origin adjustment and each having a sharp end, characterized in that said sharp ends of said pair of gauge members fitted in the paired recesses are brought into coincidence with each other for origin adjustment of the corresponding rotary joint when said corresponding rotary joint is positioned at the origin thereof.

8. An articulated type industrial robot according to Claim 7, wherein a pair of recesses for origin adjustment of each of the rotary joints are formed integrally with the corresponding adjacent components of the rotary joint.

Fig. 1

Fig. 2

Fig. 3

Fig. 4

Fig. 5

Fig. 6

Fig. 7

- 3 -

0166002

LIST OF REFERENCE NUMERALS

| | | | | |
|---|---|---|---|---|
| 11 | .... | Stationary body unit | 11a ... | Recess |
| 12 | .... | Rotary body unit | 12a ... | Recess |
| 13 | .... | First arm | 13a ... | Recess |
| 13b | ... | Recess | 14 .... | Second arm |
| 14a | ... | Recess | 14b ... | Recess |
| 15 | .... | Base wrist unit | 15a ... | Recess |
| 16 | .... | Fore wrist unit | 16a ... | Recess |
| 16b | ... | Recess | 17 .... | Motor |
| 18 | .... | Motor | 19 .... | Motor |
| 20 | .... | Gauge member | 20a ... | Sharp end |
| 21 | .... | Gauge member | 21a ... | Sharp end |
| 22 | .... | Gauge member | 22a ... | Sharp end |
| 23 | .... | Gauge member | 23a ... | Sharp end |
| 24 | .... | Gauge member | 24a ... | Sharp end |
| 25 | .... | Gauge member | 25a ... | Sharp end |
| 26 | .... | Gauge member | 26a ... | Recess |
| 27 | .... | Gauge member | 27a ... | Sharp end |
| 28 | .... | Gauge member | 28a ... | Sharp end |

# INTERNATIONAL SEARCH REPORT

International Application No. PCT/JP84/00566

## I. CLASSIFICATION OF SUBJECT MATTER (if several classification symbols apply, indicate all) [3]

According to International Patent Classification (IPC) or to both National Classification and IPC

Int. Cl.[4] B25J 9/22

## II. FIELDS SEARCHED

| Minimum Documentation Searched [4] | |
|---|---|
| Classification System | Classification Symbols |
| IPC | B25J9/22, B23C17/22 |

| Documentation Searched other than Minimum Documentation to the Extent that such Documents are Included in the Fields Searched [5] |
|---|
| Jitsuyo Shinan Koho      1926 – 1983 |
| Kokai Jitsuyo Shinan Koho      1971 – 1983 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP, B2, 53-26703 (Toyoda Machine Works, Ltd.) 3 August 1978 (03. 08. 78) (Family nashi) | 1 – 8 |
| Y | JP, A, 57-41149 (Toshiba Corp.) 8 March 1982 (08. 03. 82) (Family nashi) | 1 – 8 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| March 5, 1985 (05. 03. 85) | March 11, 1985 (11. 03. 85) |
| International Searching Authority [1] | Signature of Authorized Officer [20] |
| Japanese Patent Office | |

Form PCT/ISA/210 (second sheet) (October 1981)